# EUROPEAN PATENT SPECIFICATION

(11) **EP 2 540 017 B1**
(45) Date of publication and mention of the grant of the patent: **10.01.2018**
(21) Application number: 11706130.9
(22) Date of filing: 22.02.2011
(51) Int. Cl.: H04Q 9/04

(54) **METHODS AND APPARATUS FOR TIME SYNCHRONIZATION AND MEASUREMENT OF POWER DISTRIBUTION SYSTEMS**
VERFAHREN UND VORRICHTUNG ZUR ZEITSYNCHRONISATION UND -MESSUNG VON STROMVERTEILUNGSSYSTEMEN
PROCÉDÉS ET APPAREIL DE SYNCHRONISATION TEMPORELLE ET DE MESURE DE SYSTÈMES DE DISTRIBUTION DE PUISSANCE

(30) Priority: 22.02.2010 US 709771
(43) Date of publication of application: 02.01.2013
(60) Divisional application: 13020010.8
(73) Proprietor: Qualcomm Incorporated, San Diego, CA 92121 (US)
(72) Inventor: DELOACH, James, Douglass, Jr., San Diego California 92121 (US)
(74) Representative: Wagner, Karl H.
(86) International application number: PCT/US2011/025769
(87) International publication number: WO 2011/103597

(56) References cited:
- DE-A1-102008 046 737
- JP-A- 2005 318 494
- US-A1- 2008 077 336
- US-A1- 2009 289 637
- MCGHEE J ET AL: "Smart High Voltage Substation Based on IEC 61850 Process Bus and IEEE 1588 Time Synchronization", SMART GRID COMMUNICATIONS (SMARTGRIDCOMM), 2010 FIRST IEEE INTERNATIONAL CONFERENCE ON, IEEE, PISCATAWAY, NJ, USA, 4 October 2010 (2010-10-04), pages 489-494, XP031790276, ISBN: 978-1-4244-6510-1

## Description

### BACKGROUND

### Field

The present application relates generally to the operation of power distribution systems, and more particularly, to methods and apparatus for time synchronization and measurement of power distribution systems.

### Background

The electricity industry is going through a metamorphosis with utilities rolling out what is known as the "Smart Grid". The "Smart Grid" is an intelligent, managed, controlled, network communication overlay on top of the existing electric distribution network. Essentially the Smart Grid links utility computer servers to grid infrastructure devices and new "smart electricity meters." Several Smart Grid services require that precise time be known. For example, synchronized phasor measurements (time-stamped measurements of alternating current phase), Time of Use (TOU) metering, and scheduled load shedding are just a few of these services.

However, determining precise synchronized time across the smart grid can be challenging and expensive. Some higher end utility infrastructure components use Global Positioning System (GPS) modules to maintain precise time, but these modules are too expensive to be deployed in individual smart meters. Thus, smart meters must use other, less accurate and less expensive, means of acquiring and maintaining time.

Typically, smart meters use the power line frequency itself to measure the passing of time, filling in with expensive real-time clock components to cover power outages. Unfortunately, this adds significant cost to the meter, and time accuracy errors tend to accumulate over periods of usage. The result is that time in smart meters is nowhere near accurate enough to enable synchronized phasor measurements, and it is barely adequate for Time of Use metering.

Therefore, it would be desirable to have a simple cost effective mechanism that operates to provide time synchronization and measurement for improved monitoring and failure detection for power distribution systems.

Attention is drawn to the document US2008077336 (A1), which is primarily directed to hot-stick mountable wireless High Voltage Power Line Universal Monitors (PLUM) upon energized electrical power conductors. The PLUM wireless sensors monitor parameters associated with normal, overload and emergency operation of the power line. The present invention provides 0.2% metering grade voltage measurement accuracy through e-field measurements, synchronized through UltraSatNet Global Positioning Satellite (GPS) accuracy timing pulses. The document further attempts to improve accuracy using a unique calibration technique during initial installation of the PLUM sensor modules. A PLUM master controller receives time-synchronized data from multiple modules within a substation and across a state-wide power grid for accurate post-fault sequence-of-events analysis, high impedance fault signature analysis, and environmental and earthquake monitoring.

Attention is also drawn to document US 20090289637 A1, which describes a system and method of using a computer system to provide utility information related to a plurality of underground power line cable segments connected on opposite ends to different distribution transformers. The method comprises monitoring the impedance of each of the plurality of underground power line cable segments over time, detesting a change in the impedance of a set of the plurality of underground power line cable segments, storing in a memory information sufficient for identifying each underground power line cable segment of the set of the plur ality of underground power line cable segments for which a change in impedance is detected, generating a report that identifies the set of the plurality of underground power line cable segments for which a change in impedance is detected, and outputting the report.

Further attention is also drawn to the paper entitled "Smart High Voltage Substation Based on IEC 61850 Process Bus and IEEE 1588 Time Synchronization" by McGhee, J. et al, Smart Grid Communications (SmartGridComm), 4-6 Oct. 2010, pages 489-494, XP 031790276 ISBN: 978-1-4244-6510-1. The paper describes the experience from the installation of Smart High Voltage substation with IEC 61850 Process Bus where IEEE 1588 Time Synchronisation and dynamic multicast filtering have been used. The authors provide brief introduction to the concept of digital substation and process bus, then provide overview of IEEE 1588 standard for precise time synchronization and finally describe the details of network design and IEC 61850 engineering in a substation where the approach with process bus and IEEE 1588 has been implemented. Time synchronization had been realized with IEEE 1588 version II, implemented features regarding this standard included Transparent Clocks, peer-to-peer path delay measurement and Best Master Clock selection algorithm for dynamic selection of the clock.

### SUMMARY

In accordance with the present invention, a method and apparatus for time synchronization, as set forth in claims 1 and 8 are provided. Embodiments of the invention are claimed in the dependent claims.

A time synchronization (TS) system, comprising methods and apparatus, is provided that operates to provide time synchronization and measurement for improved monitoring and failure detection for power distribution systems.

In an aspect, a method is provided for time synchronization in a power distribution system. The method comprises receiving a synchronized wireless communication signal, synchronizing to the synchronized wireless communication signal to produce synchronized time, performing one or more power distribution measurements based on the synchronized time to produce synchronized power distribution measurements, and transmitting the synchronized power distribution measurements to a power control center.

In an aspect, an apparatus is provided for time synchronization in a power distribution system. The apparatus comprises means for receiving a synchronized wireless communication signal, means for synchronizing to the synchronized wireless communication signal to produce synchronized time, means for performing one or more power distribution measurements based on the synchronized time to produce
synchronized power distribution measurements, and means for transmitting the synchronized power distribution measurements to a power control center.

In an aspect, an apparatus is provided for time synchronization in a power distribution system. The apparatus comprises a receiver configured to receive a synchronized wireless communication signal and to synchronize to the synchronized wireless communication signal to produce synchronized time, a measurement module configured to perform one or more power distribution measurements based on the synchronized time to produce synchronized power distribution measurements, and a transmitter configured to transmit the synchronized power distribution measurements to a power control center.

In an aspect, a computer program product is provided for time synchronization in a power distribution system. The computer program product comprises a computer-readable medium embodying codes executable by a processor to receive a synchronized wireless communication signal, synchronize to the synchronized wireless communication signal to produce synchronized time, perform one or more power distribution measurements based on the synchronized time to produce synchronized power distribution measurements, and transmit the synchronized power distribution measurements to a power control center.

In an aspect, a method is provided for time synchronization in a power distribution system. The method comprises receiving one or more time synchronized power distribution measurements from one or more measurement devices, respectively, wherein each measurement device is synchronized to a synchronous wireless communication system, and analyzing the one or more time synchronized power distribution measurements to determine one or more power conditions of the power distribution system.

In an aspect, an apparatus is provided for time synchronization in a power distribution system. The apparatus comprises a transceiver configured to receive one or more time synchronized power distribution measurements from one or more measurement devices, respectively, wherein each measurement device is synchronized to a synchronous wireless communication system, and a processor coupled to the transceiver and configured to analyze the one or more time synchronized power distribution measurements to determine one or more power conditions of the power distribution system.

Other aspects will become apparent after review of the hereinafter set forth Brief Description of the Drawings, Description, and the Claims.

### BRIEF DESCRIPTION OF THE DRAWINGS

The foregoing aspects described herein will become more readily apparent by reference to the following Description when taken in conjunction with the accompanying drawings wherein:
**FIG. 1** shows an exemplary time synchronization system for use in a power distribution system;
**FIG. 2** shows an exemplary time synchronization apparatus constructed in accordance with the time synchronization system;
**FIG. 3** shows an exemplary power control center constructed in accordance with the time synchronization system;
**FIG. 4** shows an exemplary method for time synchronization and measurement in accordance with the time synchronization system;
**FIG. 5** shows an exemplary method for receiving and processing time synchronized measurements in accordance with the time synchronization system;
**FIG. 6** shows an exemplary time synchronization apparatus constructed in accordance with the time synchronization system; and
**FIG. 7** shows an exemplary power control center constructed in accordance with the time synchronization system.

### DESCRIPTION

The following description describes aspects and implementations of a time synchronization system that operates to provide time synchronization and measurement for improved monitoring and failure detection for power distribution systems.

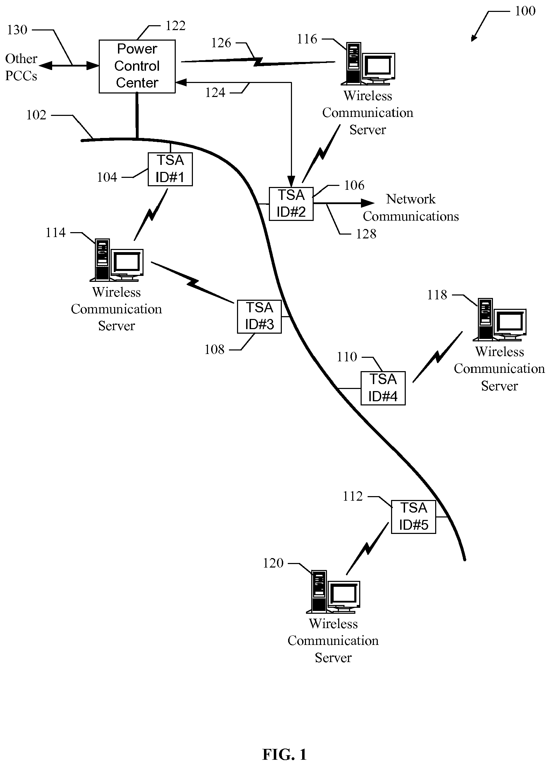

**FIG. 1** shows an exemplary time synchronization system **100** for use in a power distribution system. A power distribution line **102** is shown that is part of a distribution grid that distributes power over a selected geographic region. For example, the power distribution line **102** may distribute power over a neighborhood, community, city, county, or any other region. Coupled to the power distribution line **102** are time synchronization apparatuses (TSAs) **104, 106, 108, 110,** and **112.** For example, the TSAs may be located at businesses, residences, government buildings, selected geographic locations, or at any location where it may be desirable to monitor the power distribution line **102.** Each TSA is operable to communicate with a wireless communication server. For example, the TSAs **104** and **108** can communicate with wireless communication with server **114,** and the TSAs **106, 110,** and **112** can communicate with wireless communication with the servers **116, 118** and **120,** respectively.

In one implementation, the wireless communication servers **114, 116, 118,** and **120** are part of a code division multiple access (CDMA) wireless communication system that provides synchronous wireless communications to allow multiple nodes to communicate with each other and with other entities coupled to a network infrastructure. The CDMA system derives its time synchronization from a universal time system, such as a global positioning system (GPS). Thus, all communications are performed in a time synchronized manner. It should be noted that the time synchronization system is suitable for use with any wireless communication system operable to provide synchronous communications and is not limited to use with only CDMA systems.

Each TSA is assigned an identifier that identifies the TSA and provides a mechanism to establish its position relative to the power distribution line **102.** Each TSA comprises a wireless modem/radio allowing it to utilize signals transmitted from the wireless communication servers to acquire time synchronization from these signals. As a result, all TSAs become synchronized to within a particular threshold or accuracy. For example, utilizing CDMA signal transmissions, the TSAs may achieve time synchronization to within one microsecond.

In one implementation, knowledge of time developed inherently in the radio modem is output to clock processing circuitry at the TSAs and any measurements taken by the TSAs are tagged with this highly accurate time source. This enables each TSA to perform highly accurate phasor measurements, perform power measurements in precise intervals of time, perform any other type of measurement, and schedule tasks very precisely.

Synchronizing to the synchronous wireless transmissions allows the TS system to prevent or eliminate the problem of accumulating time errors found in conventional systems. For example, each TSA acquires and maintains time synchronization based on received radio transmissions from the time synchronized wireless servers. Thus, each TSA maintains accurate time synchronization with no accumulating time errors, unlike conventional systems which utilize local timing circuits that may experience accumulating time errors.

Once synchronized, the TSAs operate to perform any desired power line measurements. For example, the TSAs operate to measure phase, voltage, current, power utilization or any other parameters associated with the power distribution line **102.** This results in a set of measurements at known locations along the power distribution line **102** that are accurately time synchronized. For example, it is possible to obtain a set of time synchronized phase measurements along the power distribution line **102.**

Referring now to TSA **106** having identifier #2, the TSA **106** acquires time synchronization utilizing received wireless signals from wireless server **116.** The TSA **106** then makes desired power line measurements to produce synchronized power line measurements. The TSA **106** then transmits these synchronized measurements to a power control center (PCC) **122.** The measurements are transmitted wirelessly using the wireless server **116,** as illustrated by path **126,** or by using a landline communication system, as illustrated by path **124.** The landline communication system comprises telephone, network, fiber optic communication systems or other type of wired communication system, including using the power line **102.**

The phase measurements effectively measure the line frequency of the power distribution line **102.** Typically, the frequency of the power waveform is a 60 hertz sine wave. By measuring this frequency at one microsecond time intervals, the frequency (and associated phase) can be finely resolved. During processing, the measurements are correlated in real time across the entire grid to determine phase variations that may be problematic. The identity of each TSA is mapped to a geographic position which allows the locations of excessive phase variations to be determined. All TSAs shown in **FIG. 1** perform the same functions as TSA **106** and also transmit their synchronized measurements to the power control center **122.**

The power control center **122** operates to receive the synchronized measurement transmissions from TSAs located along the power distribution line **102.** The PPC **122** is aware of the position of each TSA through its identifier. The synchronized measurements are received wirelessly or through the landline system. The power control center **122** operates to analyze the synchronous measurements to determine various conditions or operating states of the power distribution line **102.** For example, the power control center **122** can determine from the synchronized measurements and the TSA identifiers whether there is an unacceptable power or phase variation at a particular location along the power distribution line **102.** The power control center **122** can also send commands or instructions to the TSAs to adjust when synchronized measurements are to be performed and which measurements to perform. Using the TSA identifiers, the power control center **122** can also communicate with selected TSAs to request that additional measurements or other actions be taken. Additionally, the PCC **122** can communicate anomaly parameters to dynamically control how TSA detect anomaly conditions on the power line **102.** A more detailed description of the anomaly parameters is provided below.

Furthermore, the PCC **122** supports a communication channel **130** that allows communication with other PCCs of the distribution grid. The communication channel **130** allows information to be exchanged between PCCs and/or allows distributed processing of power line measurements performed by the TSAs

In another implementation, each TSA may "self-locate" its position and report its position to the appropriate PCC. For example, each TSA utilizes one or more position determining capabilities of the wireless modem/radio to determine a geographic position. These position determining capabilities include, but are not limited to, cell sector identification and Advanced Forward Link Trilateration (AFLT). In AFLT, a TSA takes measurements of signals from nearby cellular base stations (towers) and reports the time/distance readings back to the PCC, which are then used to calculate an approximate location of the TSA. In general, three surrounding base stations are used to get an optimal position determination.

In another implementation, a TSA may determine its own position by interfacing to other servers or network entities. For example, each TSA comprises a network interface **128** to exchange any type of information with other network entities to determine it own position.

As a result of using one or more of the self locating techniques, each TSA reports an approximate latitude and longitude (with a known uncertainty) to the PCC to provide positional context to each power measurement. This simplifies the management of the system since the PCC would operate to self learn TSA positions rather than having to carefully maintain a database tying TSA identities to addresses and corresponding locations.

Alternatively, if the PCC does maintain a position database, having an approximate latitude and longitude delivered by the TSAs can be used to spot errors in such a database. Note that a very accurate self location determination would not be necessary. Even a basic cell sector position capability (provided by many wireless technologies) would be adequate to determine the location of grid problems or to maintain the position database.

It should be noted that a TSA can be part of every node on the distribution grid. Compared to conventional systems, which utilize a few high end infrastructure components each having expensive position finding electronics, the TSAs can be implemented with relatively minor cost and provide a virtually unlimited number of synchronized measuring points throughout the grid.

Therefore, the time synchronization system operates to provide time synchronization and measurement in a power distribution system. The system allows a large number of synchronized measurements to be acquired in a cost effective manner, and these measurements are communicated to a power control center for analysis. For example, the large number of synchronized measurements allows slight phase variations across the distribution grid to be detected. The system also allows the power control center to communicate requests for additional measurements or other actions to one or more TSAs to allow more detailed investigations of distribution conditions or inefficiencies.

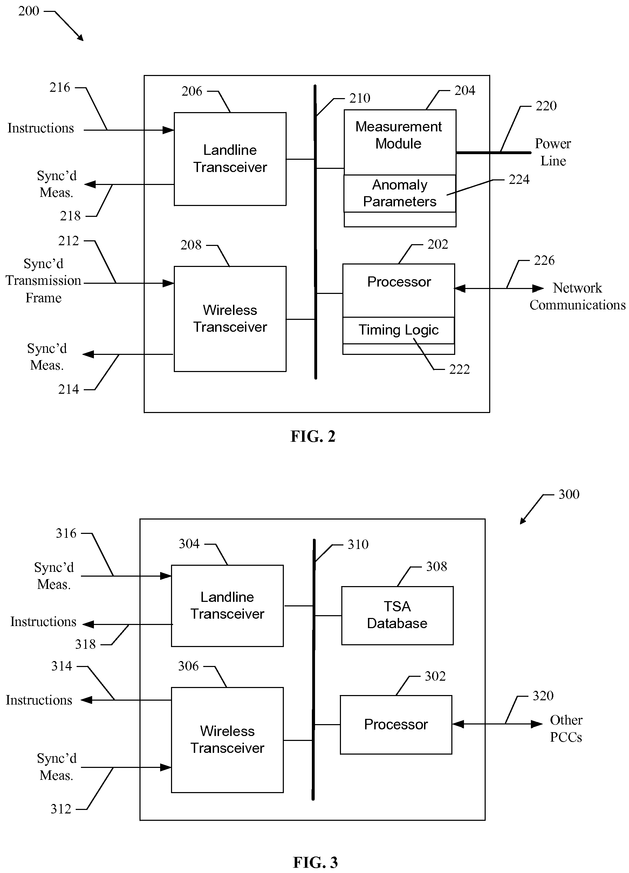

**FIG. 2** shows an exemplary TSA **200** for use in accordance with the time synchronization system. For example, the TSA **200** is suitable for use as the TSA **106** shown in **FIG. 1****.** The TSA **200** comprises processor **202,** measurement module **204,** landline transceiver **206,** and wireless transceiver **208** all coupled to communicate using data bus **210.** It should be noted that the TSA **200** is just one implementation and that other implementations are possible.

The wireless transceiver **208** comprises hardware and/or hardware executing software that operates to allow the TSA **200** to communicate data or other information with other entities using a wireless communication system. In one implementation, the transceiver **208** comprises a radio modem that is configured to communicate over a wireless communication system. For example, the transceiver **208** comprises a receiver portion that is operable to receive synchronized transmission frames **212** from a wireless communication server, such as a server operating in a CDMA communication system.

The transceiver **208** includes a transmitter portion that is operable to send data or other information to other entities using the wireless communication system. Thus, the transceiver **208** utilizes the radio modem to communicate using the wireless communication system to receive instructions from a power control center through the transmission frames **212** or may transmit synchronized measurements **214** to the power control center.

The transceiver **208** also acquires time synchronization utilizing the transmission signals of the wireless communication system. For example, during communication with the wireless communication system, the transceiver **208** inherently acquires accurate time synchronization and passes this time synchronization to timing logic **222** of the processor **202.**

The landline transceiver **206** comprises hardware and/or hardware executing software that operates to allow the TSA **200** to communicate data or other information with other entities using a landline communication system. The landline communication system comprises telephone, network, or fiber optic communication systems or other type of wired communication system, including using the power line itself. For example, the transceiver **208** is operable to send or receive data or other information to other entities using the landline communication system. For example, the transceiver **208** comprises transmitter and receiver portions that can communicate using the landline communication system to receive instructions **216** from a power control center or may transmit synchronized measurements **218** to the power control center.

The measurement module **204** comprises hardware and/or hardware executing software that operates to receive a sync signal from the processor **202** and perform one or more measurements of a power line **220.** For example, the processor **202** controls when and which measurements are to be performed by the measurement module **204.** The measurements comprise power, voltage, current, phase, usage history and/or any other type of measurement. Voltage, current, and phase are primary measurements. Power; however is a derived measurement in that it is derived from other primary measurements. The measurement module **204** is operable to determine any type of derived measurements, including load factor, harmonic content, other reactive qualities, or any other type of derived measurement. The measurements are synchronized by the received sync signal and passed to the processor **202.**

In one implementation, the measurement module **204** operates to measure the steady-state average "phase offset" of a TSA relative to a fixed point in the network. This enables an estimate of distance between any two TSAs. Phase offset generally does not become ambiguous for at least 5,000 kilometers, thus for all practical purposes it is unambiguous within any power operator's territory. The difference in phase offset between any two TSAs is an estimate of the difference in distance that the power took to travel to the two respective positions. If one TSA that is supposed to be in a particular neighborhood or region has a much different phase than other TSAs in the region, then an error condition is indicated which may require further investigation.

The measurement module **204** also comprises anomaly parameters **224.** The anomaly parameters **224** identify power line anomaly conditions to be detected by the measurement module **204.** The anomaly conditions may require the measurement module **204** to determine derived measurements. The anomaly parameters set bounds and thresholds for the primary and derived measurements associate with each anomaly condition. If the bounds or thresholds associated with an anomaly condition are exceeded, then it is determined that the anomaly condition exists. Thus, the anomaly parameters provide the bounds or thresholds for anomaly detection and in addition, the actions to be taken should one or more anomaly conditions be detected.

In one implementation, the measurement module **204** operates to detect the power line anomaly conditions asynchronously, such that any time an identified anomaly condition occurs, it will be quickly detected by the measurement module **204.**

In one implementation, the anomaly parameters **224** are pre-configured at the measurement module **204.** For example, the anomaly parameters are configured at manufacture or installation of the TSA **200.** In another implementation, the anomaly parameters **224** are configured, updated, and maintained by a PCC. For example, at any time a PCC may download anomaly parameters **224** using the transceiver **208** or the transceiver **206.** This allows the PCC to dynamically control anomaly detection performed by the TSA **200.**

Furthermore, the anomaly parameters **224** identify additional measurements associated with each anomaly condition. The additional measurements are measured when the corresponding anomaly condition is detected. For example, the measurement module **204** detects a particular anomaly condition based on the anomaly parameters **224.** The measurement module **204** then accesses the anomaly parameters **224** to determine additional measurements to be performed based on the detected anomaly condition. The additional measurements are performed and the detected anomaly and associated measurements are passed to the processor **202** for transmission to the PCC.

The processor **202** comprises at least one of a CPU, processor, gate array, hardware logic, memory elements, and/or hardware executing software. The processor **202** operates to control the measurement module **204** to perform selected measurements. The processor **202** comprises timing logic **222** that generates a sync signal that is sent to the measurement module **204** to control when measurements are to be taken. The timing logic **222** obtains synchronization from the transceiver **208** which has acquired its synchronization from received wireless transmission frames. For example, received synchronized transmission frames are received by the transceiver **208** and are analyzed by the transceiver **208** to determine an exact time reference which is indicated to the timing logic **222,** which then generates the sync signal to indicate the precise time at which particular measurements are to be performed by the measurement module **204.**

The processor **202** also comprises interface logic to support communication link **226,** which provides network communication with various network entities. For example, the processor **202** may communicate with other network entities using the link **226** to self locate the position of the TSA **200.** Any suitable location techniques may be performed and the results are reported by the processor **202** to a PCC using the transceiver **206** and/or transceiver **208.**

The processor **202** is also operable to receive instructions from a power control center using a wireless communication system or a landline communication system. For example, the power control center may encode the instructions into the received wireless transmission frames **212** that are received by the wireless transceiver **208.** The power control center may also encode the instructions into landline communications **216** that are received by the landline transceiver **206.** In either case, the received instructions are passed to the processor **202.**

The processor **202** decodes the instructions and determines if any actions are necessary. For example, if additional measurements are requested, the processor **202** controls the measurement module **204** to perform the additional measurements. The processor **202** then transmits the additional measurements to the power control center using either the landline transceiver **206** or the wireless transceiver **208.** The processor **202** may also perform any other action requested by the power control center and is not limited to obtaining just additional power line measurements. For example, the instructions may include anomaly parameters **224** that are stored at the measurement module **204.** The anomaly parameters **224** are used to allow a PCC to dynamically control anomaly detection and processing. A more detailed description of the operation of the TSA **200** is provided in another section below.

**FIG. 3** shows an exemplary power control center **300** constructed in accordance with the time synchronization system. For example, the PCC **300** is suitable for use as the PCC **122** shown in **FIG. 1****.** The PCC **300** comprises processor **302,** landline transceiver **304,** wireless transceiver **306,** TSA database **308,** all coupled to communicate using data bus **310.** It should be noted that the PCC **300** is just one implementation and that other implementations are possible.

The wireless transceiver **306** comprises hardware and/or hardware executing software that operate to allow the PCC **300** to communicate data or other information with other entities using a wireless communication system. For example, the transceiver **306** comprises a transmitter portion that is operable to transmit information, instructions, or other data to one or more TSAs using synchronized transmission frames **314** of a synchronized wireless communication system, such as a CDMA communication system. The transceiver **308** also comprises a receiver that is operable to receive synchronized measurements **312** from one or more TSAs using the synchronized wireless communication system.

The landline transceiver **304** comprises hardware and/or hardware executing software that operate to allow the PCC **300** to communicate data or other information with other entities using a landline communication system. For example, the transceiver **304** comprises a receiver portion that is operable to receive synchronized measurements **316** from one or more TSAs using the landline communication system. The transceiver **304** also comprises a transmitter that is operable to transmit instructions **318** or other data to one or more TSAs using the landline communication system

The TSA database **308** comprises information about TSAs stored in any suitable memory that is accessible via the bus **310.** The database **308** identifies TSAs by their assigned identifier and includes any other information necessary to process synchronized measurements received from any TSA. The database also associates TSA identifiers with geographic locations so that a location for each received synchronized measurement can be determined.

The processor **302** comprises at least one of a CPU, processor, gate array, hardware logic, memory elements, and/or hardware executing software. The processor **302** operates to process synchronized measurements received by the transceivers **304** and **306** to determine one or more power line conditions associated with a power distribution line. For example, the received synchronized measurements are associated with identified TSAs and the processor **302** is able to access the TSA database to determine a location associated with each received synchronized measurement. The processor **302** is then able to determine one or more power line conditions by analyzing the measurements taken at each location. For example, if one or more TSAs report low voltage conditions, the processor **302** can access the TSA database **308** to determine the location of the low voltage conditions. Similarly, synchronized phase measurements reported by the TSAs can be correlated in real time by the processor **302** to determine the location of any phase variation that may indicate loading problems or a potential blackout condition.

The processor **302** is also operable to determine if any additional measurements or actions are desired from one or more TSAs. If so, the processor **302** can control the wireless transceiver **306** to transmit instructions in the synchronized transmission frames to one or more TSAs. The instructions instruct the particular TSAs to take additional measurements, update anomaly parameters, or perform additional actions and report back the results.

The processor **302** also supports a communication channel **320** that allows communication with other PCCs of the distribution grid. The communication channel **320** allows information to be exchanged between PCCs and allows distributed processing of power line measurements performed by the TSAs. The communication channel **320** comprises any suitable communication link allowing multiple PCCs to communicate.

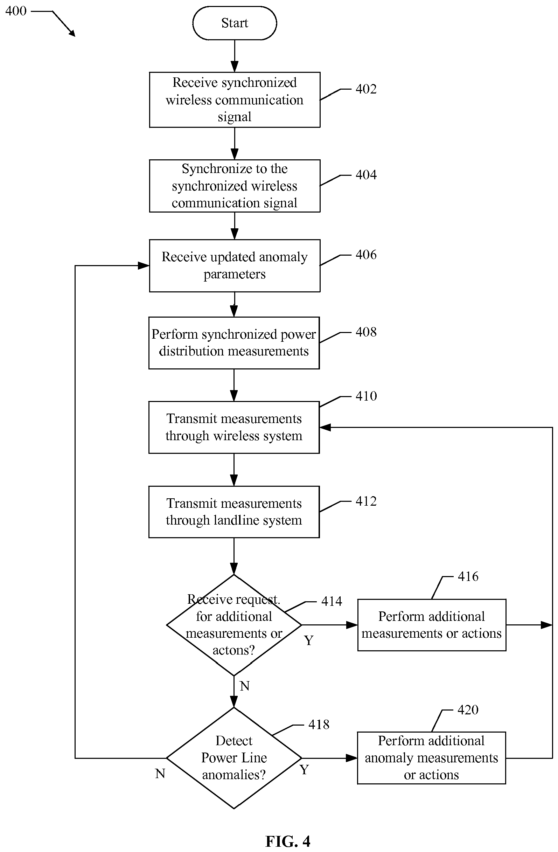

**FIG. 4** shows an exemplary method for time synchronization and measurement in accordance with the time synchronization system. For clarity, the method **400** is described below with reference to the TSA **200** shown in **FIG. 2****.** In one implementation, the processor **202** executes one or more sets of codes to control the TSA **200** to perform the functions described below.

At block **402,** synchronized wireless communication signals are received. For example, the wireless communication signals are received from a synchronized wireless communication system, such as a CDMA system, or from any other type of system that can provide synchronized communication signals. In one implementation, the transceiver **208** receives the synchronized wireless communication signals from a wireless communication server, such as the server **116** shown in **FIG. 1****.**

At block **404,** time synchronization is acquired by synchronizing to the synchronized wireless communication signal. In one implementation, the transceiver **208** determines time synchronization from the received synchronized wireless communication signals. For example, the received synchronized wireless communication signals comprise transmission frames which are synchronized to a GPS time standard. The transceiver **208** is able to analyze these received frames to acquire (or lock in) time synchronization. For example, using CDMA transmission frames, time synchronization can be determined to within one microsecond so that any device receiving the transmission frames can synchronize to this level of accuracy. The time synchronization is then indicated to the timing logic **222** which generates a corresponding sync signal.

At block **406,** updated anomaly parameters are received. In one implementation, the anomaly parameters are received by the transceiver **208** and stored at the measurement module **204** as anomaly parameters **224.** The anomaly parameters identify power line anomalies to be detected and actions to be taken in response.

At block **408,** synchronized power distribution measurements are performed. In one implementation, the timing logic **222** provides the sync signal or trigger to the measurement module **204.** The measurement module **204** responds by measuring the phase or other parameters of a power distribution line. The measurement module **204** is operable to measure the phase to any desired level of accuracy and its measurement is synchronized by the sync signal. The measurement module is also operable to perform any other type of power line measurement.

At block **410,** the measurements are transmitted to a power control center using the wireless communication system. For example, the measurement module **204** controls the wireless transceiver **208** to transmit the synchronized phase measurements to the power control center using the wireless communication link **214.**

At block **410,** in an optional operation, the synchronized phase measurements are transmitted to a power control center using a landline communication system. For example, the measurement module **204** controls the landline transceiver 206 to transmit the synchronized phase measurements to the power control center using the landline communication links **218.** The landline communication system comprises telephone, network, or fiber optic communication systems or other type of wired communication system, including using the power line itself.

At block **412,** a determination is made as to whether a request for additional measurements or other actions has been received. For example, a request for additional measurements may be generated by a PCC and transmitted to the TSA **200** using the wireless transmission frames **212.** If a request for additional measurements or other actions has not been received, the method proceeds to block **418.** If a request for additional measurements or other actions has been received, the method proceeds to block **416.** The processor **202** makes this determination.

At block **416,** additional measurements or actions are performed. For example, the processor **202** controls the measurement module **204** to perform the additional phase measurements or other power distribution measurements. Once the additional measurements or actions are performed, the method proceeds to block **410** to transmit the measurements.

At block **418,** a determination is made as to whether any power line anomalies are detected. For example, in one implementation, the measurement module **204** is pre-configured with anomaly parameters **224** that identify a set of power line anomalies to be checked. These anomalies include excessive power usage, voltage or current spikes, or any other type of anomaly associated with the power line **102.** In another implementation, the PCC provides the anomaly parameters at block **406.** For example, the PCC can dynamically adjust the anomalies to be detected by providing and/or updating the anomaly parameters **224** at any time. The anomaly parameters identify boundaries and thresholds for primary or derived measurements. If the boundaries or thresholds are exceeded, the measurement module determines which if any anomaly conditions exist. If one or more anomaly conditions exist, the method proceeds to block **420.** If no anomaly conditions exist, the method proceeds to block **406.**

At block **420,** additional measurements or actions are performed. For example, the anomaly parameters **224** comprise additional measurements to be performed for each detected anomaly. For example, if a low voltage anomaly is detected; additional measurements, such as power or current measurements may be performed. The processor **202** controls the measurement module **204** to perform the additional measurements based on the anomalies detected and corresponding measurements identified in the anomaly parameters **224.** Once the additional measurements or actions are performed, the method proceeds to block **410** to transmit the results to a PCC.

Therefore, in one implementation, the method **400** is performed by a TSA at any location associated with a power distribution line to determine synchronized phase measurements or other power distribution parameters and to transmit those measurements to a power control center using wireless and/or landline transmission links. It should be noted that the method **400** is just one implementation and that the operations of the method **400** may be rearranged or otherwise modified within the scope of the various implementations. Thus, other implementations are possible.

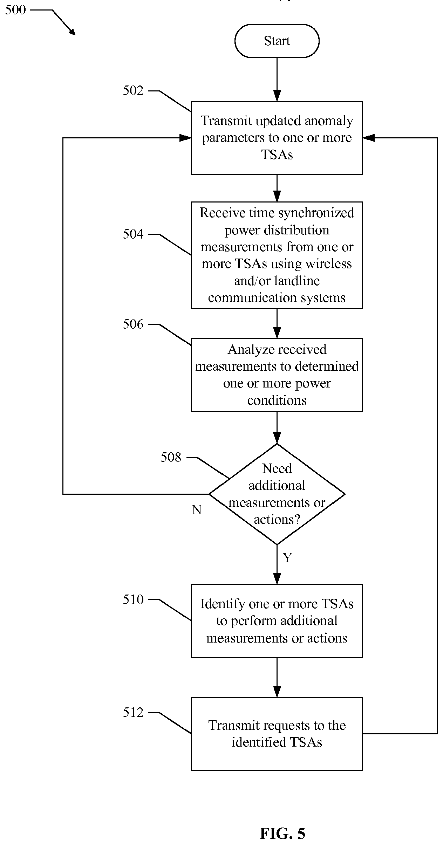

**FIG. 5** shows an exemplary method **500** for receiving and processing synchronized measurements in accordance with the time synchronization system. For clarity, the method **500** is described below with reference to the PCC **300** shown in **FIG. 3****.** In one implementation, the processor **302** executes one or more sets of codes to control the PCC **300** to perform the functions described below.

At block **502,** updated anomaly parameters are transmitted to one or more TSAs. For example, the processor **302** generates the anomaly parameters and transmits them to the identified TSAs using the transceiver **306.**

At block **504,** synchronized power distribution measurements are received from one or more TSAs. For example, the synchronized power distribution measurements are received from a landline communication system using the transceiver **304** or a wireless communication system using the transceiver **306.** Each of the synchronized power distribution measurements is associated with an identified TSA.

At block **506,** the received measurements are analyzed to determine one or more power line conditions. For example, the processor **302** analyzes measurements from multiple TSAs to determine fluctuations in power, voltage, current, phase or any other parameter. In one implementation, the processor **302** determines a location of a particular power line condition indicated by one or more TSAs by determining the location of the TSAs from the TSA database **308.** For example, to determine phase variations, the processor 302 correlates received synchronized phase measurement in real time to detect any phase variations that may be problematic. The locations of the detected phase variations can then be determined based on the TSA identifiers and corresponding locations obtained from the TSA database **308.**

At block **508,** a determination is made as to whether additional measurements or actions are desired. For example, additional measurements may be desired from one or more TSAs to fully analyze a particular power line condition. If no additional measurements or actions are required, the method ends. If additional measurements or actions are required, the method proceeds to block **508.** The processor **302** makes this determination.

At block **510,** one or more TSAs are identified to perform additional measurements or actions. For example, the processor **302** determines one or more power line conditions based on previous synchronized measurements and identifies one or more TSAs from which additional measurements are desired to perform further analysis. The TSAs are identified by their location and/or unique identifier. For example, if a phase variation is detected at a particular location, the processor **302** operates to request additional phase measurements from TSAs located at or near that location.

At block **512,** requests for additional measurements or actions are transmitted to the identified TSAs. The processor **302** identifies the TSAs and associated measurements to be obtained in one or more requests. The requests are forwarded to the wireless transceiver **306** for transmission to the identified TSAs using the transmission frames **312** of the wireless communication system. The method then proceeds to block **502** to update anomaly parameters.

Therefore, the method **500** is operable to analyze synchronized measurements reported by a plurality of TSAs and if desired, request additional measurements or actions from one or more particular TSAs. It should be noted that the method **500** is just one implementation and that the operations of the method **500** may be rearranged or otherwise modified within the scope of the various implementations. Thus, other implementations are possible.

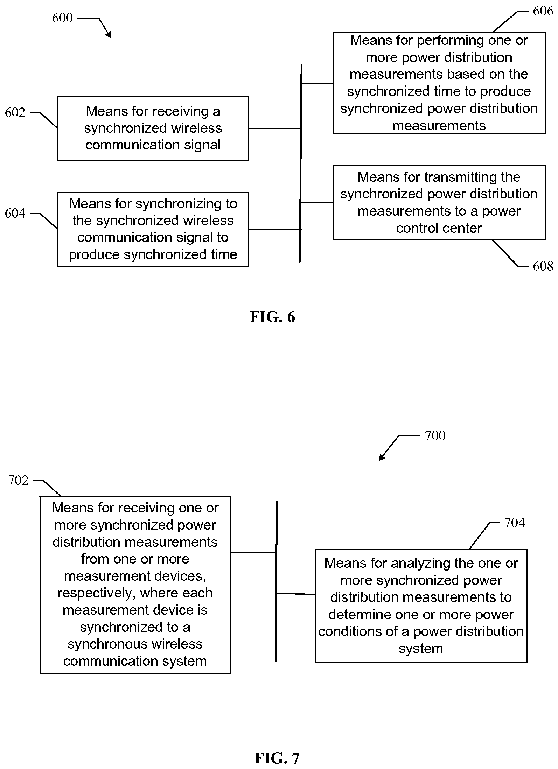

**FIG. 6** shows an exemplary time synchronization apparatus **600** constructed in accordance with the time synchronization system. For example, the TSA **600** is suitable for use as the TSA **200** shown in **FIG. 2****.** In an aspect, the TSA **600** is implemented by at least one integrated circuit comprising one or more modules configured to provide aspects of a time synchronization system as described herein. For example, in one implementation, each module comprises hardware and/or hardware executing software.

The TSA **600** comprises a first module comprising means **(602)** for receiving a synchronized wireless communication signal, which in an aspect comprises the transceiver **208.** The TSA **600** also comprises a second module comprising means **(604)** for synchronizing to the synchronized wireless communication signal to produce synchronized time, which in an aspect comprises the transceiver **208.** The TSA **600** also comprises a third module comprising means **(606)** for performing one or more power distribution measurements based on the synchronized time to produce synchronized power distribution measurements, which in an aspect comprises the measurement module **204.** The TSA **600** also comprises a fourth module comprising means **(608)** for transmitting the synchronized power distribution measurements to a power control center, which in an aspect comprises the transceiver **208.**

**FIG. 7** shows an exemplary power control center **700** constructed in accordance with the time synchronization system. For example, the PCC **700** is suitable for use as the PCC **300** shown in **FIG. 3****.** In an aspect, the PCC **700** is implemented by at least one integrated circuit comprising one or more modules configured to provide aspects of a time synchronization system as described herein. For example, in one implementation, each module comprises hardware and/or hardware executing software.

The PCC **700** comprises a first module comprising means **(702)** for receiving one or more time synchronized power distribution measurements from one or more measurement devices, respectively, wherein each measurement device is synchronized to a synchronous wireless communication system, which in an aspect comprises the transceiver **306.** The PCC **700** also comprises a second module comprising means **(704)** for analyzing the one or more time synchronized power distribution measurements to determine one or more power conditions of the power distribution system, which in an aspect comprises the processor **302.**

In one or more exemplary embodiments, the functions described may be implemented in hardware, software to be executed by a computer, firmware, or any combination thereof. If implemented in software, the functions may be stored on or transmitted over as one or more instructions or codes on a computer-readable medium. Computer-readable medium includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The description of the disclosed aspects is provided to enable any person skilled in the art to make or use the present invention. Various modifications to these aspects may be readily apparent to those skilled in the art, and the generic principles defined herein may be applied to other aspects, e.g., in an instant messaging service or any general wireless data communication applications, without departing from the scope of the invention as defined in the amended claims. Thus, the present invention is not intended to be limited to the aspects shown herein but is to be accorded the widest scope consistent with appended claims. The word "exemplary" is used exclusively herein to mean "serving as an example, instance, or illustration." Any aspect described herein as "exemplary" is not necessarily to be construed as preferred or advantageous over other aspects.

Accordingly, while aspects of a time synchronization system have been illustrated and described herein, it will be appreciated that various changes can be made to the aspects without departing from their spirit or essential charcteristics. Therefore, the disclosures and descriptions herein are intended to be illustrative, but not limiting, of the scope of the invention, which is set forth in the following claims.

## Claims

1. A method (400) for time synchronization in a power distribution system, the method comprising:
receiving (402) a synchronized wireless communication signal;
synchronizing (404) to the synchronized wireless communication signal to produce synchronized time;
receiving (406) anomaly parameters identifying power line anomalies to be detected;
performing (408) one or more power distribution measurements based on the synchronized time and said anomaly parameters to produce synchronized power distribution measurements;
transmitting (410, 412) the synchronized power distribution measurements to a power control center (122); and
receiving (406) updated anomaly parameters.

2. The method (400) of claim 1, wherein said receiving comprising receiving the synchronized wireless communication signal from a server (116) in a synchronous communication system (100).

3. The method (400) of claim 2, wherein said synchronous communication system is a code division multiple access (CDMA) system.

4. The method (400) of claim 1, wherein said synchronizing comprises synchronizing to transmission frames in the synchronized wireless communication signal to prevent accumulated time errors.

5. The method (400) of claim 1, wherein said performing comprises performing the one or more power distribution measurements on a power line (102) to determine one or more synchronized primary or derived measurements.

6. The method (400) of claim 1, wherein said one or more power distribution measurements comprise at least one measurement selected from power, current, voltage, and phase measurements.

7. The method (400) of claim 1, further comprising:
receiving (414) a request for one or more additional measurements;
performing (416) the one or more additional measurements to produce one or more additional results; and
transmitting (410, 412) the one or more additional results.

8. An apparatus (600) for time synchronization in a power distribution system, the apparatus comprising:
means for receiving (602) a synchronized wireless communication signal;
means for synchronizing (604) to the synchronized wireless communication signal to produce synchronized time;
means for receiving anomaly parameters identifying power line anomalies to be detected;
means for performing (606) one or more power distribution measurements based on the synchronized time and said anomaly parameters to produce synchronized power distribution measurements;
means for transmitting (608) the synchronized power distribution measurements to a power control center; and
means for receiving updated anomaly parameters identifying power line anomalies to be detected.

9. The apparatus (600) of claim 8, wherein said means for receiving comprising means for receiving the synchronized wireless communication signal from a server in a synchronous communication system.

10. The apparatus (600) of claim 9, wherein said synchronous communication system is a code division multiple access (CDMA) system.

11. The apparatus (600) of claim 8, wherein said means for synchronizing comprises means for synchronizing to transmission frames in the synchronized wireless communication signal to prevent accumulated time errors.

12. The apparatus (600) of claim 8, wherein said means for performing comprises means for performing the one or more power distribution measurements on a power line to determine one or more synchronized primary or derived measurements.

13. The apparatus (600) of claim 8, wherein said one or more power distribution measurements comprise at least one measurement selected from power, current, voltage, and phase measurements.

14. The apparatus (600) of claim 8, further comprising:
means for receiving a request for one or more additional measurements;
means for performing the one or more additional measurements to produce one or more additional results; and
means for transmitting the one or more additional results.

15. A computer program product comprising a computer readable medium having program code recorded thereon, the program code comprising instructions for carrying out the steps of any of claims 1 to 7.

## Patentansprüche

1. Ein Verfahren (400) zur zeitlichen Synchronisation in einem Leistungsverteilungssystem, wobei das Verfahren Folgendes aufweist:
Empfangen (402) eines synchronisierten Drahtloskommunikationssignals;
Synchronisieren (404) mit dem synchronisierten Drahtloskommunikationssignal zum Erzeugen einer synchronisierten Zeit;
Empfangen (406) von Anomalieparametern, die Stromleitungsanomalien identifizieren, die detektiert werden sollen;
Durchführen (408) einer oder mehrerer Leistungsverteilungsmessungen basierend auf der synchronisierten Zeit und den Anomalieparametern zum Erzeugen von synchronisierten Leistungsverteilungsmessungen;
Senden (410, 412) der synchronisierten Leistungsverteilungsmessungen an ein Leistungssteuerungszentrum (122); und
Empfangen (406) von aktualisierten Anomalieparametern.

2. Verfahren (400) nach Anspruch 1, wobei das Empfangen Empfangen des synchronisierten Drahtloskommunikationssignals von einem Server (116) in einem synchronen Kommunikationssystem (100) aufweist.

3. Verfahren (400) nach Anspruch 2, wobei das synchrone Kommunikationssystem ein Codemultiplex-Vielfachzugriffs- bzw. CDMA-System (CDMA = code division multiple access) ist.

4. Verfahren (400) nach Anspruch 1, wobei das Synchronisieren Synchronisieren auf Senderahmen in dem synchronisierten Drahtloskommunikationssignal aufweist, um akkumulierte Zeitfehler zu verhindern.

5. Verfahren (400) nach Anspruch 1, wobei das Durchführen Durchführen der ein oder mehreren Leistungsverteilungsmessungen auf einer Stromleitung (102) aufweist, um ein oder mehrere synchronisierte primäre oder abgeleitete Messungen zu bestimmen.

6. Verfahren (400) nach Anspruch 1, wobei die ein oder mehreren Leistungsverteilungsmessungen wenigstens eine Messung aufweisen, die aus Leistungs-, Strom-, Spannungs- und Phasenmessungen ausgewählt ist.

7. Verfahren (400) nach Anspruch 1, das weiter Folgendes aufweist:
Empfangen (414) einer Anfrage hinsichtlich einer oder mehreren zusätzlichen Messungen;
Durchführen (416) der ein oder mehreren zusätzlichen Messungen zum Erzeugen von ein oder mehreren zusätzlichen Ergebnissen; und
Senden (410, 412) der ein oder mehreren zusätzlichen Ergebnisse.

8. Eine Vorrichtung (600) zur zeitlichen Synchronisation in einem Leistungsverteilungssystem, wobei die Vorrichtung Folgendes aufweist:
Mittel zum Empfangen (602) eines synchronisierten Drahtloskommunikationssignals;
Mittel zum Synchronisieren (604) mit dem synchronisierten Drahtloskommunikationssignal zum Erzeugen einer synchronisierten Zeit;
Mittel zum Empfangen von Anomalieparametern, die Stromleitungsanomalien identifizieren, die detektiert werden sollen;
Mittel zum Durchführen (606) einer oder mehrerer Leistungsverteilungsmessungen basierend auf der synchronisierten Zeit und den Anomalieparametern zum Erzeugen von synchronisierten Leistungsverteilungsmessungen;
Mittel zum Senden (608) der synchronisierten Leistungsverteilungsmessungen an ein Leistungssteuerungszentrum; und
Mittel zum Empfangen von aktualisierten Anomalieparametern, die Stromleitungsanomalien identifizieren, die detektiert werden sollen.

9. Vorrichtung (600) nach Anspruch 8, wobei die Mittel zum Empfangen Mittel aufweisen zum Empfangen des synchronisierten Drahtloskommunikationssignals von einem Server in einem synchronen Kommunikationssystem.

10. Vorrichtung (600) nach Anspruch 9, wobei das synchrone Kommunikationssystem ein Codemultiplex-Vielfachzugriffs- bzw. CDMA-System (CDMA = code division multiple access) ist.

11. Vorrichtung (600) nach Anspruch 8, wobei die Mittel zum Synchronisieren Mittel aufweisen zum Synchronisieren von Senderahmen in dem synchronisierten Drahtloskommunikationssignal, um akkumulierte Zeitfehler zu verhindern.

12. Vorrichtung (600) nach Anspruch 8, wobei die Mittel zum Durchführen Mittel zum Durchführen der ein oder mehreren Leistungsverteilungsmessungen an einer Stromleitung aufweisen, um ein oder mehrere synchronisierte primäre oder abgeleitete Messungen zu bestimmen.

13. Vorrichtung (600) nach Anspruch 8, wobei die ein oder mehreren Leistungsverteilungsmessungen wenigstens eine Messung aufweisen, die aus Leistungs-, Strom-, Spannungs-, und Phasenmessungen ausgewählt ist.

14. Vorrichtung (600) nach Anspruch 8, die weiter Folgendes aufweist:
Mittel zum Empfangen einer Anfrage hinsichtlich einer oder mehreren zusätzlichen Messungen;
Mittel zum Durchführen der ein oder mehreren zusätzlichen Messungen zum Erzeugen von ein oder mehreren zusätzlichen Ergebnissen; und
Mittel zum Senden der ein oder mehreren zusätzlichen Ergebnisse.

15. Ein Computerprogrammprodukt, das ein computerlesbares Medium mit darauf aufgezeichnetem Programmcode aufweist, wobei der Programmcode Instruktionen aufweist, um die Schritte nach einem der Ansprüche 1 bis 7 durchzuführen.

## Revendications

1. Procédé (400) de synchronisation temporelle dans un système de distribution d'alimentation, le procédé comprenant :
recevoir (402) un signal de communication sans fil synchronisé ;
se synchroniser (404) sur le signal de communication sans fil synchronisé pour produire un temps synchronisé ;
recevoir (406) des paramètres d'anomalies identifiant des anomalies de ligne d'alimentation à détecter ;
réaliser (408) une ou plusieurs mesures de distribution d'alimentation sur la base du temps synchronisé et des paramètres d'anomalies pour produire des mesures de distribution d'alimentation synchronisées ;
transmettre (410, 412) les mesures de distribution d'alimentation synchronisées à un centre de contrôle d'alimentation (122) ; et
recevoir (406) des paramètres d'anomalies mis à jour.

2. Procédé (400) selon la revendication 1, dans lequel la réception comprend la réception du signal de communication sans fil synchronisé à partir d'un serveur (116) dans un système de communication synchrone (100).

3. Procédé (400) selon la revendication 2, dans lequel le système de communication synchrone est un système à accès multiple par différence de code (CDMA).

4. Procédé (400) selon la revendication 1, dans lequel la synchronisation comprend une synchronisation sur des trames de transmission dans le signal de communication sans fil synchronisé pour empêcher l'accumulation d'erreurs temporelles.

5. Procédé (400) selon la revendication 1, dans lequel la réalisation comprend la réalisation desdites une ou plusieurs mesures de distribution d'alimentation sur une ligne d'alimentation (102) pour déterminer une ou plusieurs mesures synchronisées primaires ou déduites.

6. Procédé (400) selon la revendication 1, dans lequel lesdites une ou plusieurs mesures de distribution d'alimentation comprennent au moins une mesure sélectionnée parmi des mesures de puissance, de courant, de tension et de phase.

7. Procédé (400) selon la revendication 1, comprenant en outre :
recevoir (414) une demande pour obtenir une ou plusieurs mesures additionnelles ;
réaliser (416) lesdites une ou plusieurs mesures additionnelles pour produire un ou plusieurs résultats additionnels ; et
transmettre (410, 412) lesdits un ou plusieurs résultats additionnels.

8. Dispositif (600) de synchronisation temporelle dans un système de distribution d'alimentation, le dispositif comprenant :
des moyens pour recevoir (602) un signal de communication sans fil synchronisé ;
des moyens pour se synchroniser (604) sur le signal de communication sans fil synchronisé pour produire un temps synchronisé ;
des moyens pour recevoir des paramètres d'anomalies identifiant des anomalies de ligne d'alimentation à détecter ;
des moyens pour réaliser (606) une ou plusieurs mesures de distribution d'alimentation sur la base du temps synchronisé et des paramètres d'anomalies pour produire des mesures de distribution d'alimentation synchronisées ;
des moyens pour transmettre (608) les mesures de distribution d'alimentation synchronisées à un centre de contrôle d'alimentation; et
des moyens pour recevoir des paramètres d'anomalies mis à jour identifiant des anomalies de ligne d'alimentation à détecter.

9. Dispositif (600) selon la revendication 8, dans lequel les moyens pour recevoir comprennent des moyens pour recevoir le signal de communication sans fil synchronisé à partir d'un serveur dans un système de communication synchrone.

10. Dispositif (600) selon la revendication 9, dans lequel le système de communication synchrone est un système à accès multiple par différence de code (CDMA).

11. Dispositif (600) selon la revendication 8, dans lequel les moyens pour se synchroniser comprennent des moyens pour se synchroniser sur des trames de transmission dans le signal de communication sans fil synchronisé pour empêcher l'accumulation d'erreurs temporelles.

12. Dispositif (600) selon la revendication 8, dans lequel les moyens pour réaliser comprennent des moyens pour réaliser lesdites une ou plusieurs mesures de distribution d'alimentation sur une ligne d'alimentation pour déterminer une ou plusieurs mesures synchronisées primaires ou déduites.

13. Dispositif (600) selon la revendication 8, dans lequel lesdites une ou plusieurs mesures de distribution d'alimentation comprennent au moins une mesure sélectionnée parmi des mesures de puissance, de courant, de tension et de phase.

14. Dispositif (600) selon la revendication 8, comprenant en outre :
des moyens pour recevoir une demande pour obtenir une ou plusieurs mesures additionnelles ;
des moyens pour réaliser lesdites une ou plusieurs mesures additionnelles pour produire un ou plusieurs résultats additionnels ; et
des moyens pour transmettre lesdits un ou plusieurs résultats additionnels.

15. Produit programme informatique comprenant un support lisible par un ordinateur comportant du code de programme mémorisé sur lui, le code de programme comprenant des instructions pour réaliser les étapes de l'une quelconque des revendications 1 à 7.
